# EUROPEAN PATENT APPLICATION

(11) **EP 2 525 275 A1**
(43) Date of publication of application: **21.11.2012**
(21) Application number: 11166960.2
(22) Date of filing: 20.05.2011
(51) Int. Cl.: G06F 3/041, G06F 3/044

(54) **Electronic device with capacitive touch-sensitive display**

(71) Applicant: Research In Motion Limited, Waterloo, ON N2L 3W8 (CA)
(72) Inventor: Van Schyndel, Andre John, Ottawa Ontario K2K 3K1 (CA); Golovchenko, Mykola, Sunnyvale, CA 94089 (US); Pereverzev, Stanislav, Sunnyvale, CA 94089 (US)
(74) Representative: Fennell, Gareth Charles

(57) **Abstract**

A method includes utilizing a plurality of electrodes of a capacitive touch-sensitive display to detect touches on the touch-sensitive display, concurrently driving a first group of the plurality of electrodes, and detecting an object spaced from the touch-sensitive display utilizing a second group of the plurality of electrodes while concurrently driving the first group of the plurality of electrodes.

## Description

### FIELD OF TECHNOLOGY

The present disclosure relates to electronic devices including, but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with displays are desirable.

### SUMMARY

A method includes utilizing a plurality of electrodes of a capacitive touch-sensitive display to detect touches on the touch-sensitive display, concurrently driving a first group of the plurality of electrodes, and detecting an object spaced from the touch-sensitive display utilizing a second group of the plurality of electrodes while concurrently driving the first group of the plurality of electrodes. An electronic device includes a capacitive touch-sensitive display comprising a plurality of electrodes and a controller coupled to the electrodes to detect touches on the touch-sensitive display and to detect an object spaced from the touch-sensitive display by concurrently driving each of a first group of the plurality of the electrodes while sensing utilizing a second group of the plurality of the electrodes.

### BRIEF DESCRIPTION OF THE DRAWINGS

FIG. 1 is a block diagram of a portable electronic device in accordance with an example embodiment.

FIG. 2 is a front view of an example of a portable electronic device in accordance with the disclosure.

FIG. 3 is a side view illustrating electrodes generating an electric field extending away from a surface of a touch-sensitive display in accordance with the disclosure.

FIG. 4 is a flowchart illustrating a method of controlling the portable electronic device in accordance with the disclosure.

FIG. 5 illustrates another example of a portable electronic device.

FIG. 6 is a side view illustrating electrodes generating an electric field extending away from a surface of a touch-sensitive display in accordance with the disclosure.

### DETAILED DESCRIPTION

The following describes an electronic device and a method that includes utilizing a plurality of electrodes of a capacitive touch-sensitive display to detect touches on the touch-sensitive display, concurrently driving a first group of the plurality of electrodes, and detecting an object spaced from the touch-sensitive display utilizing a second group of the plurality of electrodes while concurrently driving the first group of the plurality of electrodes.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

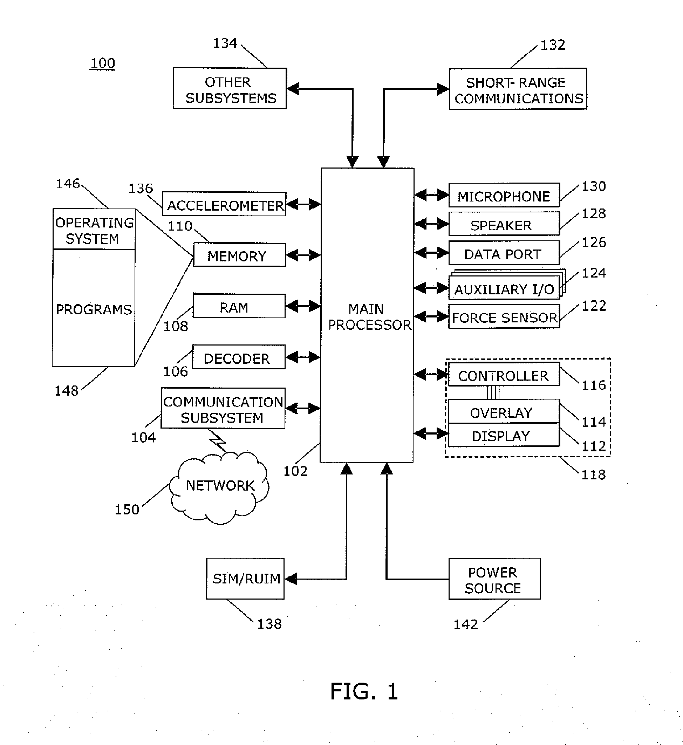

A block diagram of an example of an electronic device 100 is shown in FIG. 1. The electronic device 100, which may be a portable electronic device, includes multiple components, such as a processor 102 that controls the overall operation of the electronic device 100. The electronic device 100 presently described optionally includes a communication subsystem 104 and a short-range communications 132 module to perform various communication functions, including data and voice communications. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on an electronic device, is displayed on the touch-sensitive display 118 via the processor 102. The processor 102 may interact with an orientation sensor such as an accelerometer 136 to detect direction of gravitational forces or gravity-induced reaction forces, for example, to determine the orientation of the electronic device 100.

To identify a subscriber for network access, the electronic device 100 may optionally use a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable capacitive touch-sensitive display as known in the art. A capacitive touch-sensitive display may include a capacitive touch-sensitive overlay 114. The overlay 114 may be an assembly of multiple layers in a stack which may include, for example, a substrate, a ground shield layer, a barrier layer, one or more electrode layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include data for an area of contact, referred to as a touch area, or data for a single point of contact, such as a point at or near a center of the area of contact. A touch may be detected from any suitable input member, such as a finger, thumb, appendage, or other items, for example, a stylus, pen, or other pointer. The controller 116 and/or the processor 102 may detect a touch by any suitable input member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point. A gesture may be identified by attributes of the gesture, including the origin point, the end point, the distance traveled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

An optional force sensor 122 or force sensors may be disposed in any suitable location, for example, between the touch-sensitive display 118 and a back of the electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

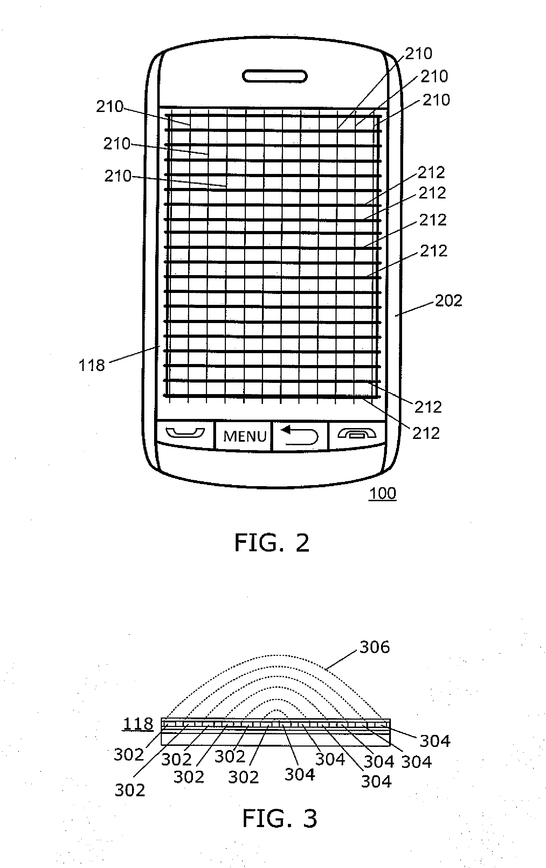

A front view of an example of the electronic device 100 is shown in FIG. 2. The electronic device 100 includes a housing 202 in which the touch-sensitive display 118 is disposed. The housing 202 and the touch-sensitive display 118 enclose components such as the components shown in FIG. 1. Electrodes 210, 212 are illustrated in FIG. 2 for the purpose of description. Electrodes of a touch-sensitive display 118, however, are made of an optically clear conductive material such as ITO.

In the example of FIG. 2, the touch-sensitive overlay 114 includes long electrodes 210 that extend in one layer, generally parallel to each other, across the length of the display 112. The touch-sensitive overlay 114 also includes short electrodes 212 that extend in another layer, generally parallel to each other, across the width of the display 112. The long electrodes 210 extend generally perpendicularly to the short electrodes 212. Nodes, referred to herein as sensors, in a mutual capacitive touch-sensitive display are positions at which the long electrodes 210 cross over or under the short electrodes 212. The layers in which the electrodes 210, 212 are disposed are layers of a typical overlay that are separated by a substrate or other barrier. The long electrodes 210 and the short electrodes 212 may be disposed in respective parallel planes.

The long electrodes 210 and the short electrodes 212 are utilized to detect touches and determine touch locations during a scan, for example, by driving the long electrodes 210 while sensing utilizing the short electrodes 212. "While" includes simultaneously or at least partially overlapping in time. A long electrode 210 may be driven by applying a voltage across the long electrode 210. Sensing is carried out by detecting changes in signals from the short electrodes 212. Changes in signals from the short electrodes 212 are caused by changes in capacitance at sensors that are near a touch area. The changes in signals are detected at the controller 116 and utilized to determine a touch location. Touch data includes changes in signals when a touch is detected.

During a scan of the touch-sensitive display 118 to detect touches, long electrodes 210 are driven successively while successively sensing utilizing the short electrodes 212. A scan includes a plurality of frames in which a long electrode 210 is driven while sensing utilizing a short electrode 212. For example, one frame of a scan may include driving a first long electrode 210 and sensing utilizing a first short electrode 212. Another frame of a scan may include driving the first long electrode 210 and sensing utilizing a second short electrode. A plurality of pairings of long electrodes 210 and short electrodes 212 are utilized in a plurality of frames of a scan, during which the long electrode 210 is driven while the short electrode 212 is utilized for sensing.

One of the frames of a scan may be utilized to detect an object near but spaced from the touch-sensitive display, referred to herein as proximity detection. During proximity detection, a group of electrodes are driven at the same time while a different group of electrodes are utilized to detect objects. A group may be two or more electrodes, although one electrode may be utilized in some applications, for example, with additional gain. For example, one group of the electrodes 210, 212 may be wider than the other. In the example illustrated in FIG. 2, the short electrodes 212 are wider than the long electrodes 210. The wide electrodes on one half of the touch-sensitive display 118 are driven while changes in signals are detected utilizing the wide electrodes on the other half of the touch-sensitive display 118. Electrodes extending across an upper half of the touch-sensitive display 118 may be driven while electrodes extending across a lower half of the touch-sensitive display 118 are utilized to detect objects. Alternatively, electrodes extending across the lower half of the touch-sensitive display 118 may be driven while electrodes extending across an upper half of the touch-sensitive display 118 are utilized to detect objects. In another example, the long electrodes 210 extending across a right side of the touch-sensitive display 118 may be driven while the remainder of the long electrodes 210 extending across a left side of the touch-sensitive display 118 are utilized to detect objects. Alternatively, electrodes extending across a left side of the touch-sensitive display 118 may be driven while electrodes extending across a right side of the touch-sensitive display 118 are utilized to detect objects.

Concurrently driving a plurality of the electrodes and sensing or detecting objects by utilizing a plurality of electrodes facilitates formation of an electric field that extends away from the touch-sensitive display. Changes in capacitance caused by objects that are near the touch-sensitive display and in the electric field may be detected.

A side view of the touch-sensitive display 118 including wide electrodes generating an electric field is illustrated in FIG. 3. In this example, a group of electrodes 302 are concurrently driven while changes in capacitance are detected utilizing the group of electrodes 304. The electric field 306 extends beyond and away from the surface of the touch-sensitive display 118. When an object extends into the electric field, changes in signals from the electrodes 304 are detected. The electric field 306 is shown simplistically in dashed lines for illustrative purposes only and is not intended to accurately depict the electric fields generated by the group of electrodes 302.

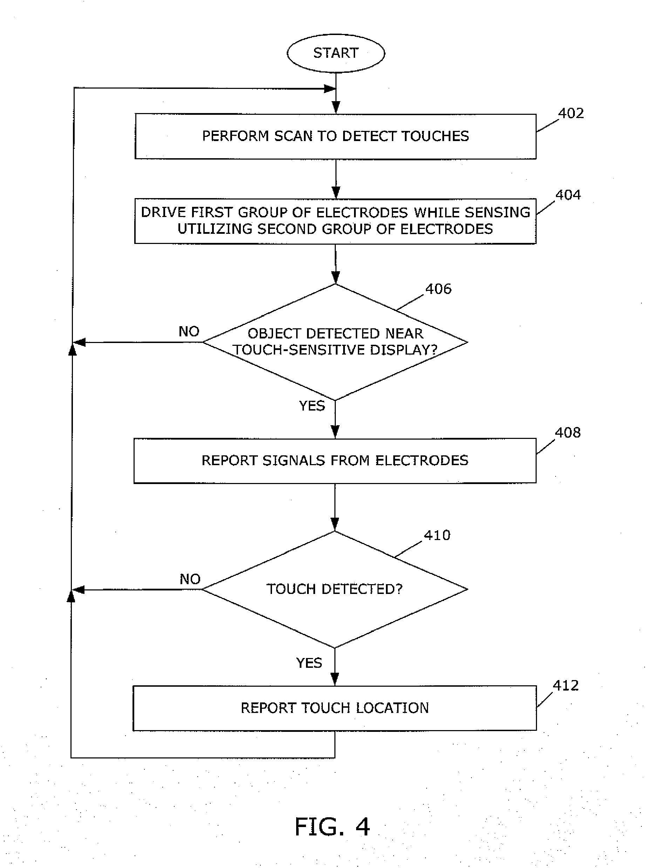

A flowchart illustrating a method of controlling an electronic device, such as the electronic device 100, is shown in FIG. 4. The method may be carried out by software executed, for example, by the controller 116 and/or the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

A scan that detects a touch is performed 402. A scan includes a one or more frames. During a frame of the scan, a long electrode 210 may be driven while changes in capacitance are detected utilizing a short electrode 212. Scans may be performed, for example, at a rate of about 10 to 150 Hz. The scan duration may be, for example, between 1 and 30 ms.

During the scan, one of the frames is utilized for proximity detection 404. During proximity detection, a group of electrodes are driven at the same time while changes in signals are detected utilizing a different group of electrodes to provide an electric field that extends away from the touch-sensitive display. The group of electrodes are driven by concurrently driving each of the electrodes of the group. Changes in the capacitance are detected between these groups of electrodes, which changes are caused by objects that are near the touch-sensitive display and in the electric field.

When an object is detected 406 near the touch-sensitive display 118 during proximity detection, the signals from the electrodes utilized to detect the object are reported 408. The signals may be reported, for example, by the controller 116 to the processor 102. The signals may be utilized, for example, to detect a face near the touch-sensitive display 118. Detection of a face during operation of the portable electronic device 100 for voice communication, such as a phone call, may be utilized to turn off a backlight of the display 112 to reduce power consumption, to discard or ignore touches detected on the touch-sensitive display 118, to reduce other processing that is not needed during a call, to perform any other suitable function, or any combination thereof.

When a touch is detected 410 based on the frames of the scan that are utilized to detect the touch, the touch location is reported 412. The touch location may be reported, for example, to the processor 102. The processor 102 may utilize the information from the frames of the scan to determine when to use the touch. When, for example, a face is not detected, the touch may be reported to the active application, or the application executed by the processor 102. The touch may be utilized for selecting displayed or virtual keys of a keyboard, icons, function buttons, and other selectable features. A face may be detected when a face is detected during proximity detection in a previous scan, followed by a touch that is detected in many frames of a scan over a wide area of the touch-sensitive display 118, for example.

Touches may be detected, for example, during selection of an option to begin a phone call and selection of numbers for the phone call. Based on the signals from the groups of electrodes during proximity detection, the touches are not face touches and selections are made. When the phone call is initiated, a face may be detected near the touch-sensitive display 118. When the face is detected, the backlight of the display 112 may be turned off, for example. Touch data may not be utilized by the processor 102 when the face is detected. Alternatively, proximity detection may be utilized to wake up the display, for example, when an object approaches the display.

In the example described above, the wide electrodes on one half of the touch-sensitive display 118 are driven while changes in signals are detected utilizing the wide electrodes on the other half of the touch-sensitive display 118. Alternatively, the electrodes closest to the cover layer on the touch-sensitive display 118, referred to as the top electrodes, may be utilized. The top electrodes on one half of the touch-sensitive display 118 may be driven while changes in signals are detected utilizing the top electrodes on the other half of the touch-sensitive display 118. Although the groups are described in terms of half of the electrodes above, other percentages of allocation of electrodes among the groups may be successfully utilized.

In an alternative example, other groups of electrodes may be utilized for proximity detection. The separation of the driving electrodes from the detecting electrodes facilitates the extension of the electric field away from the screen.

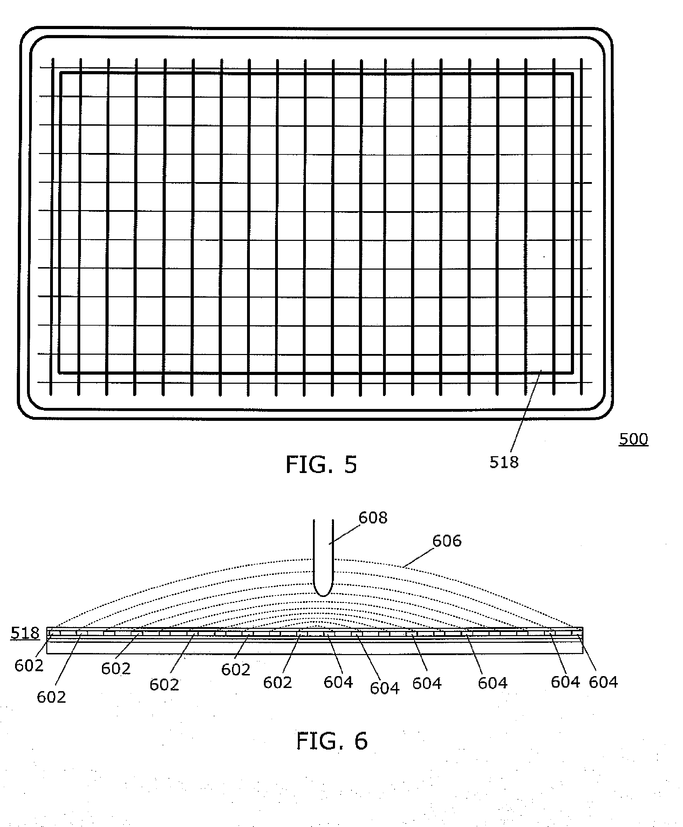

Another example of a portable electronic device 500 is illustrated in FIG. 5. The touch-sensitive display of the electronic device 500 includes a plurality of electrodes. A frame of a scan may be utilized to detect an object near but spaced from the touch-sensitive display 518 of the portable electronic device 500. The touch-sensitive display 518 may be similar in function and larger in size than the touch-sensitive display 118. The remaining frames of the scan may be utilized for touch detection.

A side view of the touch-sensitive display 518 including wide electrodes generating an electric field is illustrated in FIG. 6. In this example, a group of electrodes 602 are concurrently driven while changes in capacitance are detected utilizing the other group of electrodes 604. The electric field 606, shown in dashed lines, is intended to be illustrative only and extends beyond and away from the surface of the touch-sensitive display 518. When an object, such as the object 608, extends into the electric field, the object interrupts or interferes with the electric field 606 and changes in signals from the electrodes 604 are detected. Various characteristics of the object 608, such as resistance or grounding, vary the affect the object 608 has on the electric filed 606. The affects of the interruption of or interference with the electric field 606 are not illustrated for the sake of simplicity of the illustration. The electric field 606 is shown simplistically in dashed lines for illustrative purposes only and is not intended to accurately depict the electric fields generated by the group of electrodes 602.

Proximity detection may be utilized, for example, to detect a face or other object near a touch-sensitive display. When a face is detected near the touch-sensitive display, a backlight of the display may be turned off to reduce power consumption. Optionally, when a face is detected and the electronic device 100 is in a hands-free or speaker mode, the electronic device 100 may automatically change from speaker mode to handset mode, reducing the volume of the speaker 128. Buttons or selectable features on the touch-sensitive display may be temporarily disabled or not selectable by a touch to reduce the chance of inadvertent selection of features. Detection of an objection near a touch-sensitive display may advantageously be carried out utilizing the same electrodes utilized for detecting touches on the touch-sensitive display and further hardware is not required.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
utilizing a plurality of electrodes of a capacitive touch-sensitive display to detect touches on the touch-sensitive display;
concurrently driving each of a first group of the plurality of electrodes;
detecting an object spaced from the touch-sensitive display utilizing a second group of the plurality of electrodes while driving the first group of the plurality of electrodes.

2. The method according to claim 1, wherein utilizing the plurality of electrodes to detect touches comprises performing a scan utilizing the plurality of electrodes.

3. The method according to claim 1, wherein utilizing the plurality of electrodes to detect touches comprises successively driving the first group of the plurality of electrodes while successively sensing utilizing the second group of the plurality of electrodes.

4. The method according to claim 1, wherein detecting an object comprises utilizing signals from the first group and the second group of electrodes when a touch is not detected on the touch-sensitive display.

5. The method according to claim 1, wherein the second group of the plurality of the electrodes comprises a remainder of the plurality of electrodes that are not included in the first group of electrodes.

6. The method according to claim 1, wherein the first group of the plurality of the electrodes comprise electrodes of one layer of the touch-sensitive display.

7. The method according to claim 6, wherein the second group of the plurality of electrodes comprise the remaining electrodes of the layer.

8. The method according to claim 1, wherein the first group of the plurality of electrodes comprises electrodes on a half of a display and the second group of the plurality of electrodes comprises electrodes on another half of the display.

9. The method according to claim 1, wherein utilizing the plurality of electrodes of a capacitive touch-sensitive display to detect touches comprises utilizing the plurality of electrodes in a plurality of frames of a scan to detect touches.

10. The method according to claim 1, wherein detecting an object is carried out in at least one of a plurality of frames of a scan to detect touches.

11. A computer-readable medium having computer-readable code executable by at least one processor of the electronic device to perform the method of claim 1.

12. An electronic device comprising:
a capacitive touch-sensitive display comprising a plurality of electrodes and a controller coupled to the electrodes to detect touches on the touch-sensitive display and to detect an object spaced from the touch-sensitive display by concurrently driving each of a first group of the plurality of the electrodes while sensing utilizing a second group of the plurality of the electrodes.

13. The electronic device according to claim 12, comprising a processor coupled to the controller and wherein a signal is sent from the controller to the processor when the object is detected and a touch is not detected.

14. The electronic device according to claim 12, wherein the first group of the plurality of electrodes comprise electrodes of one layer of the touch-sensitive display and the second group of the plurality of electrodes comprise the remaining electrodes of the layer.

15. The electronic device according to claim 12, wherein the first group of the plurality of electrodes comprises electrodes that are on a half of the touch-sensitive display and wherein the second group comprises electrodes that are on another half of the touch-sensitive display.
